# FASCICULE DE BREVET EUROPEEN

(11) **EP 0 982 063 B1**
(45) Date de publication et mention de la délivrance du brevet: **08.06.2005**
(21) Numéro de dépôt: 99402051.9
(22) Date de dépôt: 12.08.1999
(51) Int. Cl.: B01D 53/047, B01J 20/18

(54) **Procédé PSA utilisant une zéolite faujasite contenant des cations métalliques en tant qu'adsorbant**
PSA Verfahren unter Verwendung von Metallkationen enthaltendem Zeolith des Faujasitstyps
PSA process using as adsorbent faujasite type zeolite containing metal cations

(30) Priorité: 21.08.1998 FR 9810623
(43) Date de publication de la demande: 01.03.2000
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Labasque, Jacques, 78000 Versailles (FR); Moreau, Serge, 78140 Velizy-Villacoublay (FR); Lledos, Bernard, 78280 Guyancourt (FR)
(74) Mandataire: Pittis, Olivier

(56) Documents cités:
- EP-A- 0 667 183
- EP-A- 0 685 430
- EP-A- 0 855 209
- US-A- 5 174 979

## Description

L'invention conceme un procédé de type PSA, et plus particulièrement de type VSA, de séparation d'un flux gazeux, en particulier d'un flux gazeux contenant essentiellement de l'oxygène et de l'azote, tel l'air.

Les gaz de l'air, tels notamment l'oxygène et l'azote, présentent un grand intérêt industriel. Actuellement, une des techniques non-cryogéniques utilisées pour produire ces gaz est la technique dite "PSA" (pour Pressure Swing Adsorption), laquelle recouvre non seulement les procédés PSA proprement dits, mais aussi les procédés analogues, tels les procédés VSA (Vacuum Swing Adsorption) ou MPSA (Mixed Pressure Swing Adsorption).

Selon cette technique PSA, lorsque le mélange gazeux à séparer est l'air et que le composant à récupérer est l'oxygène, ledit oxygène est séparé dudit mélange gazeux grâce à une adsorption préférentielle d'au moins l'azote sur un matériau adsorbant préférentiellement au moins l'azote et soumis à des cycles de pression donnée dans la zone de séparation.

L'oxygène ne s'adsorbant pas ou peu est récupéré en sortie de ladite zone de séparation; celui-ci à une pureté, en général, supérieure à 90 %, voire à 93%.

Plus généralement, un procédé PSA pour la séparation non-cryogénique d'un mélange gazeux comprenant un premier composé s'adsorbant préférentiellement sur un matériau adsorbant et un deuxième composé s'adsorbant moins préférentiellement sur ledit matériau adsorbant que ledit premier composé, en vue de la production dudit deuxième composé, comprend de manière cyclique :
- une étape d'adsorption préférentielle d'au moins ledit premier composé sur ledit matériau adsorbant, à une pression d'adsorption dite "pression haute", avec récupération d'au moins une partie du deuxième composé ainsi produit;
- une étape de désorption du premier composé ainsi piégé par l'adsorbant, à une pression de désorption inférieure à la pression d'adsorption, dite "pression basse";
- une étape de recompression de la zone de séparation comprenant adsorbant, par passage de ladite pression basse à ladite pression haute.

Cependant, il est connu que l'efficacité de séparation d'un mélange gazeux, tel l'air, dépend de nombreux paramètres, notamment la pression haute, la pression basse, le type de matériau adsorbant utilisé et l'affinité de celui-ci pour les composés à séparer, la composition du mélange gazeux à séparer, la température d'adsorption du mélange à séparer, la taille des particules d'adsorbant, la composition de ces particules et le gradient de température s'établissant à l'intérieur du lit d'adsorbant.

A ce jour, bien qu'aucune loi de comportement générale n'ait pu être déterminée, sachant qu'il est très difficile de relier ces différents paramètres entre eux, il est également connu que la nature et les propriétés de l'adsorbant jouent un rôle primordial dans l'efficacité globale du procédé.

Actuellement, les zéolites sont les adsorbants les plus utilisés dans les procédés PSA.

Les particules zéolitiques contiennent habituellement des cations métalliques mono, di et/ou trivalents, par exemples des cations de métaux alcalins, alcalino-terreux, de métaux de transition et/ou lanthanides, incorporés lors de la synthèse des particules de zéolite et/ou insérés subséquemment par une technique d'échange d'ions, c'est-à-dire, en général, par mise en contact des particules de zéolite non-échangées ou zéolite brute avec une solution d'un ou plusieurs sels métalliques comprenant le ou les cations à incorporer dans la structure zéolitique et récupération subséquente des particules de zéolite échangée, c'est-à-dire de zéolite contenant une quantité donnée de cations métalliques. La proportion de cations métalliques introduits dans la structure zéolitique par rapport à la capacité totale d'échange est appelée le taux d'échange, lequel est compris entre 0 et 100 %.

Par ailleurs, les adsorbants les plus utilisés dans les procédés de type PSA de séparation de gaz, en particulier de l'air, sont des zéolites, notamment de type X ou LSX, fortement échangées et contenant, en général plus de 80%, voire plus de 95% de cations de métaux très coûteux, tels notamment des cations lithium. De telles zéolites sont notamment décrites dans les documents EP-A-486384, EP-A-606848, EP-A-589391, EP-A-589406, EP-A-548755, US-A-268023, EP-A-109063 et EP-A-760248.

Par ailleurs, le document EP-A-667183 enseigne un procédé utilisant un adsorbant de type zéolite X ou LSX permettant d'éliminer l'azote d'un flux de gaz, en particulier d'air. L'adsorbant contient de 50 à 95% de cations Li, de 4 à 50% de cations de type aluminium, cérium, lanthane et mélanges de lanthanides, et de 0 à 15% d'autres cations.

Cependant, les performances dudit procédé, notamment la capacité ou la sélectivité d'adsorption, et le coût global de production du gaz peuvent varier considérablement selon l'adsorbant mis en oeuvre dans le procédé PSA.

Le but de la présente invention est alors de proposer un procédé de séparation de gaz, en particulier un procédé PSA de séparation des gaz de l'air, mettant en oeuvre un adsorbant de type zéolitique susceptible de conduire à des performances meilleures que celles des procédé utilisant des adsorbants de l'art antérieur.

La présente invention concerne alors un procédé PSA de séparation d'un flux gazeux contenant au moins un premier composé gazeux s'adsorbant préférentiellement sur au moins un adsorbant et au moins un deuxième composé gazeux s'adsorbant moins préférentiellement sur au moins ledit adsorbant que ledit premier composé gazeux, caractérisé en ce que ledit au moins un adsorbant comprend des particules de zéolite X ayant un rapport Si/Al < 1.5 contenant de 80 à 99% de cations Li⁺, de 0.01 à 25% de cations Na⁺, 0.01% à 10% de cations Mg²⁺, 0.01 % à 10% de cations Ca²⁺ et de 0 à 3% de cations K⁺, la somme des proportions en cations Li⁺, Na⁺, Mg²⁺, Ca²⁺ et K⁺ étant égale à 100% des cations contenus dans la phase zéolitique de l'adsorbant.

Le taux de cations exprimé en % est la proportion de cations métalliques contenus dans la phase zéolitique par rapport à la proportion maximale de cations pouvant se trouver dans la phase zéolitique de l'adsorbant.

Selon le cas, l'adsorbant de l'invention peut inclure l'une ou plusieurs des caractéristiques suivantes :
- ladite zéolite X a un rapport Si/AI égal à approximativement 1, une telle zéolite est appelée zéolite LSX (Low Silica X) ou zéolite pauvre en silice.
- ladite zéolite X contient au moins 85% de cations Li⁺, de préférence au moins 86%, et/ou au plus 96% de cations Li⁺.
- ladite zéolite X contient au plus 15% de cations Na⁺, de préférence au plus 14%, préférentiellement encore au plus 12%, et/ou au moins 4% de cations Na⁺.
- ladite zéolite X contient au plus 5% de cations Mg²⁺, de préférence au plus 2%, et/ou au moins 0.1 % de cations Mg²⁺, de préférence au moins 0.2%.
- ladite zéolite X contient au plus 8% de cations Ca²⁺, de préférence au plus 5%, et/ou au moins 0.2 % de cations Ca²⁺, de préférence au moins 1%.
- ladite zéolite X contient au plus 3% de cations K⁺, de préférence au plus 1%, préférentiellement, au plus 0.5%.
- le flux gazeux à séparer comprend de l'azote et au moins un composé gazeux moins polaire, notamment de l'oxygène et/ou de l'hydrogène, et, de préférence le flux gazeux est de l'air, le premier composé gazeux étant l'azote et le deuxième composé gazeux étant l'oxygène. L'air étant, dans le cadre de la présente invention, l'air contenu à l'intérieur d'un bâtiment ou d'une enceinte chauffée ou non, ou l'air extérieur, c'est-à-dire dans les conditions atmosphériques, pris tel quel ou éventuellement prétraité.
- le premier composé gazeux est l'azote et le deuxième composé gazeux est oxygène; et on produit un flux gazeux riche en oxygène, c'est-à-dire comprenant, en général, au moins 90% d'oxygène.
- il est de type VSA (Vacuum Swing Adsorption),
- la pression haute d'adsorption est comprise entre 10⁵ Pa et 10⁷ Pa, de préférence, de l'ordre de 10⁵ Pa à 10⁶ Pa, et/ou la pression basse de désorption est comprise entre 10⁴ Pa et 10⁶ Pa, de préférence, de l'ordre de 10⁴ Pa à 10⁵ Pa,
- la température d'alimentation est comprise entre 10°C et 80°C, de préférence entre 25°C et 60°C.

L'invention concerne également un adsorbant susceptible d'être mis en oeuvre dans un procédé selon l'invention, lequel adsorbant comprend des particules de zéolite X ayant un rapport Si/Al < 1.5, de préférence de l'ordre de 1, contenant de 80 à 99% de cations Li⁺, de 0.01 à 20% de cations Na⁺, 0.01% à 10% de cations Mg²⁺, 0.01% à 10% de cations Ca²⁺ et de 0 à 3% de cations K⁺, la somme des proportions en cations Li⁺, Na⁺, Mg²⁺, Ca²⁺ et K⁺ étant égale à 100% des cations contenues dans la phase zéolitique de l'adsorbant.

L'invention va maintenant être décrite plus en détail à l'aide d'exemples donnés à titre illustratif, mais non limitatif.

### Exemples

Les zéolites A à E, dont les compositions en cations lithium, sodium, magnésium, calcium et potassium sont données dans le tableau I suivant, sont utilisées comme adsorbant dans un procédé, de type VSA, de séparation des gaz de l'air par adsorption, pour produire de l'oxygène ayant une pureté d'environ 93%.

**Tableau I :**

| Composition de la phase zéolitique | | | | | |
|---|---|---|---|---|---|
| Zéolite n° | Li (en % en équivalents) | Na (en % en équivalents) | Mg (en % en équivalents) | Ca (en % en équivalents) | K (en % en équivalents) |
| A | 0 | 96.02 | 0.28 | 2.28 | 1.42 |
| B | 70.70 | 23.91 | 0.81 | 4.15 | 0.43 |
| C | 79.40 | 15.74 | 0.67 | 3.88 | 0.32 |
| D | 91.29 | 3.72 | 0.17 | 4.41 | 0.41 |
| E | 96.32 | 0.01 | 0.57 | 3.07 | 0.03 |

Dans ces essais, les conditions de mise en oeuvre du procédé VSA sont les suivantes :
- 2 adsorbeurs fonctionnant en parallèle
- pression d'adsorption : 1,4.10⁵ Pa
- pression de désorption : 0,4.10⁵ Pa
- température de l'air d'alimentation : 35°C environ
- adsorbant : lit de zéolite A à E
- cycles de production : 2 x 40 secondes environ

Les performances, c'est-à-dire le rendement et la productivité, du procédé VSA obtenues pour les zéolites A à E testées sont données dans le tableau II suivant sous forme de valeurs indicées (la référence étant la zéolite A).

Le rendement (exprimé en %) est défini comme étant le quotient de la quantité d'oxygène pur contenu dans l'oxygène produit par la quantité d'oxygène pur introduit

La productivité (exprimée en Nm³/h/m³ d'adsorbant) est définie comme étant le quotient de la quantité d'oxygène pur contenu dans l'oxygène produit par la quantité (volume ou masse) d'adsorbant utilisé pour cette production.

Il est à noter que les zéolites A à C n'entrent pas dans le cadre de la présente invention, alors que les zéolites D et E sont conformes à la présente invention.

**Tableau II :**

| Performances en VSA | | |
|---|---|---|
| Zéolite n° | Rendement | Productivité |
| A | 100.0 | 100.0 |
| B | 103.8 | 104.7 |
| C | 112.0 | 117.7 |
| D | 131.6 | 183.7 |
| E | 133.3 | 191.6 |

Les résultats obtenus montrent que les performances (rendement et productivité) les meilleures sont obtenues pour les zéolites D et E conformes à la présente invention.

La présente invention n'est pas limitée au domaine de la production d'oxygène à partir d'air et peut donc, dès lors, être appliquée à la séparation d'autres flux gazeux, tels notamment à des flux contenant de l'hydrogène, du dioxyde de carbone et/ou du monoxyde de carbone, en particulier à la production de gaz de synthèse ou "syngaz".

## Revendications

1. Procédé PSA de séparation d'un flux gazeux contenant au moins un premier composé gazeux s'adsorbant préférentiellement sur au moins un adsorbant et au moins un deuxième composé gazeux s'adsorbant moins préférentiellement sur au moins ledit adsorbant que ledit premier composé gazeux, **caractérisé en ce que** ledit au moins un adsorbant comprend des particules de zéolite X ayant un rapport Si/Al < 1.5 et contenant de 80 à 99% de cations Li⁺, de 0.01 à 20% de cations Na⁺, 0.01% à 10% de cations Mg²⁺, 0.01% à 10% de cations Ca²⁺ et de 0 à 3% de cations K⁺, la somme des proportions en cations Li⁺, Na⁺, Mg²⁺, Ca²⁺ et K⁺ étant égale à 100% des cations contenus dans la phase zéolitique de l'adsorbant.

2. Procédé selon la revendication 1, **caractérisé en ce que** ladite zéolite X a un rapport Si/Al égal à approximativement 1.

3. Procédé selon l'une des revendications 1 ou 2, **caractérisé en ce que** ladite zéolite X contient au moins 85% de cations Li⁺, de préférence au moins 86%, et/ou au plus 96% de cations Li⁺.

4. Procédé selon l'une des revendications 1 ou 2, **caractérisé en ce que** ladite zéolite X contient au plus 15% de cations Na⁺, de préférence au plus 12%, et/ou au moins 4% de cations Na⁺.

5. Procédé selon l'une des revendications 1 ou 2, **caractérisé en ce que** ladite zéolite X contient au plus 5% de cations Mg²⁺, de préférence au plus 2%, et/ou au moins 0.1 % de cations Mg²⁺.

6. Procédé selon l'une des revendications 1 ou 2, **caractérisé en ce que** ladite zéolite X contient au plus 8% de cations Ca²⁺, de préférence au plus 5%, et/ou au moins 0.2 % de cations Ca²⁺.

7. Procédé selon l'une des revendications 1 ou 2, **caractérisé en ce que** ladite zéolite X contient au plus 3% de cations K⁺, de préférence au plus 1%.

8. Procédé selon l'une des revendications 1à 7, **caractérisé en ce qu'**il est de type VSA.

9. Procédé selon l'une des revendications 1 à 8, **caractérisé en ce que** le flux gazeux à séparer comprend de l'azote et au moins un composé gazeux moins polaire, notamment de l'oxygène et/ou de l'hydrogène, et, de préférence le flux gazeux est de l'air, le premier composé gazeux étant l'azote et le deuxième composé gazeux étant l'oxygène.

10. Adsorbant susceptible d'être mis en oeuvre dans un procédé selon l'une des revendications 1 à 9, comprenant des particules de zéolite X ayant un rapport Si/Al < 1.5, de préférence de l'ordre de 1, contenant de 80 à 99% de cations Li⁺, de 0.01 à 20% de cations Na⁺, 0.01% à 10% de cations Mg²⁺, 0.01% à 10% de cations Ca²⁺ et de 0 à 3% de cations K⁺, la somme des proportions en cations Li⁺, Na⁺, Mg²⁺, Ca²⁺ et K⁺ étant égale à 100% des cations contenus dans la phase zéolitique de l'adsorbant.

## Patentansprüche

1. PSA-Verfahren zur Trennung eines Gasstroms, der mindestens eine erste gasförmige Verbindung, die an mindestens einem Adsorptionsmittel bevorzugt adsorbiert wird, und mindestens eine zweite gasförmige Verbindung, die an dem mindestens einen Adsorptionsmittel weniger bevorzugt adsorbiert wird als die erste gasförmige Verbindung, enthält, **dadurch gekennzeichnet, daß** das mindestens eine Adsorptionsmittel zumindest teilweise aus Teilchen aus Zeolith X, der ein Si/Al-Verhältnis < 1,5 aufweist und 80 bis 99% Li⁺-Kationen, 0,01 bis 20% Na⁺-Kationen, 0,01 bis 10% Mg²⁺-Kationen, 0,01 bis 10% Ca²⁺-Kationen und 0 bis 3% K⁺-Kationen enthält, wobei die Summe der Anteile der Li⁺-, Na⁺-, Mg²⁺-, Ca²⁺- und K⁺-Kationen gleich 100% der in der zeolithischen Phase des Adsorptionsmittels enthaltenen Kationen ist, besteht.

2. Verfahren nach Anspruch 1, **dadurch gekennzeichnet, daß** der Zeolith X ein Si/Al-Verhältnis von ungefähr 1 aufweist.

3. Verfahren nach Anspruch 1 oder 2, **dadurch gekennzeichnet, daß** der Zeolith X mindestens. 85% Li⁺-Kationen, vorzugsweise mindestens 86%, und/oder höchstens 96% Li⁺-Kationen enthält.

4. Verfahren nach Anspruch 1 oder 2, **dadurch gekennzeichnet, daß** der Zeolith X höchstens 15% Na⁺-Kationen, vorzugsweise höchstens 12%, und/oder mindestens 4% Na⁺-Kationen enthält.

5. Verfahren nach Anspruch 1 oder 2, **dadurch gekennzeichnet, daß** der Zeolith X höchstens 5% Mg²⁺-Kationen, vorzugsweise höchstens 2%, und/oder mindestens 0,1% Mg²⁺-Kationen enthält.

6. Verfahren nach Anspruch 1 oder 2, **dadurch gekennzeichnet, daß** der Zeolith X höchstens 8% Ca²⁺-Kationen, vorzugsweise höchstens 5%, und/oder mindestens 0,2% Ca²⁺-Kationen enthält.

7. Verfahren nach Anspruch 1 oder 2, **dadurch gekennzeichnet, daß** der Zeolith X höchstens 3% K⁺-Kationen, vorzugsweise höchstens 1%, enthält.

8. Verfahren nach einem der Ansprüche 1 bis 7, **dadurch gekennzeichnet, daß** es sich um ein VSA-Verfahren handelt.

9. Verfahren nach einem der Ansprüche 1 bis 8, **dadurch gekennzeichnet, daß** der zu trennende Gasstrom Stickstoff und mindestens eine weniger polare gasförmige Verbindung, insbesondere Sauerstoff und/oder Wasserstoff, enthält und es sich vorzugsweise bei dem Gasstrom um Luft handelt, wobei es sich bei der ersten gasförmigen Verbindung um Stickstoff und bei der zweiten gasförmigen Verbindung um Sauerstoff handelt.

10. Zur Verwendung bei einem Verfahren nach einem der Ansprüche 1 bis 9 geeignetes Adsorptionsmittel, zumindest teilweise bestehend aus Teilchen aus Zeolith X, der ein Si/Al-Verhältnis < 1,5, vorzugsweise etwa 1, aufweist und 80 bis 99% Li⁺-Kationen, 0,01 bis 20% Na⁺-Kationen, 0,01 bis 10% Mg²⁺-Kationen, 0,01 bis 10% Ca²⁺-Kationen und 0 bis 3% K⁺-Kationen enthält, wobei die Summe der Anteile der Li⁺-, Na⁺-, Mg²⁺-, Ca²⁺- und K⁺-Kationen gleich 100% der in der zeolithischen Phase des Adsorptionsmittels enthaltenen Kationen ist.

## Claims

1. PSA process for separating a gas flow containing at least one first gas compound which is preferentially adsorbed on at least one adsorbent, and at least one second gas compound which is adsorbed less preferentially on at least the said adsorbent than the said first gas compound, **characterized in that** the said at least one adsorbent comprises particles of X zeolite having an Si/Al ratio < 1.5 and containing 80 to 99% Li⁺ cations, 0.01 to 20% Na⁺ cations, 0.01% to 10% Mg²⁺ cations, 0.01% to 10% Ca²⁺ cations and 0 to 3% K⁺ cations, the sum of the proportions of Li⁺, Na⁺, Mg²⁺, Ca²⁺ and K⁺ cations being equal to 100% of the cations contained in the zeolite phase of the adsorbent.

2. Process according to Claim 1, **characterized in that** the said X zeolite has an Si/Al ratio equal to approximately 1.

3. Process according to one of Claims 1 and 2, **characterized in that** the said X zeolite contains at least 85% Li⁺ cations, preferably at least 86%, and/or at most 96% Li⁺ cations.

4. Process according to one of Claims 1 and 2, **characterized in that** the said X zeolite contains at most 15% Na⁺ cations, preferably at most 12%, and/or at least 4% Na⁺ cations.

5. Process according to one of Claims 1 and 2, **characterized in that** the said X zeolite contains at most 5% Mg²⁺ cations, preferably at most 2%, and/or at least 0.1% Mg²⁺ cations.

6. Process according to one of Claims 1 and 2, **characterized in that** the said X zeolite contains at most 8% Ca²⁺ cations, preferably at most 5%, and/or at least 0.2% Ca²⁺ cations.

7. Process according to one of Claims 1 and 2, **characterized in that** the said X zeolite contains at most 3% K⁺ cations, preferably at most 1%.

8. Process according to one of Claims 1 to 7, **characterized in that** it is of the VSA type.

9. Process according to one of Claims 1 to 8, **characterized in that** the gas flow to be separated comprises nitrogen and at least one less polar gas compound, in particular oxygen and/or hydrogen, and, preferably the gas flow is air, the first gas compound being nitrogen and the second gas compound being oxygen.

10. Adsorbent capable of being employed in a process according to one of Claims 1 to 9, comprising particles of X zeolite having an Si/Al ratio < 1.5, preferably of the order of 1, containing 80 to 99% Li⁺ cations, 0.01 to 20% Na⁺ cations, 0.01% to 10% Mg²⁺ cations, 0.01% to 10% Ca^{2 +} cations and 0 to 3% K⁺ cations, the sum of the proportions of Li⁺, Na⁺, Mg²⁺, Ca²⁺ and K⁺ cations being equal to 100% of the cations contained in the zeolite phase of the adsorbent.
